(19) **Europäisches Patentamt**

**European Patent Office**

**Office européen des brevets**

(11) **EP 1 696 601 A1**

(12) **EUROPEAN PATENT APPLICATION**

(43) Date of publication:
**30.08.2006 Bulletin 2006/35**

(51) Int Cl.:
***H04L 9/06*** (2006.01)

(21) Application number: **05101526.1**

(22) Date of filing: **28.02.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicants:
- **Chopard, Bastien**
  **1246 Corsier (CH)**
- **MARCONI, Stéphane**
  **1207 Genève (CH)**

(72) Inventors:
- **Chopard, Bastien**
  **1246 Corsier (CH)**
- **MARCONI, Stéphane**
  **1207 Genève (CH)**

(74) Representative: **Wenger, Joel-Théophile**
**Leman Consulting S.A.**
**62 route de Clémenty**
**1260 Nyon (CH)**

(54) **Symmetrical encryption method**

(57) A method for encrypting and decrypting data is disclosed. Unlike any previous methods, the present invention performs efficient, scalable and flexible encryption by using full advantages of the way the data to encrypt is structured. The method is based on the well-known confusion-diffusion paradigm. The confusion is performed using random invertible or reversible s-boxes while the diffusion is achieved at the bit level between neighbouring s-boxes. Correctly structuring the data in a topological space allows for optimal diffusion to occur. The method is naturally adapted to be implemented in hardware with great efficiency. Its scalable nature allows for variable block sizes, which either in hardware and software allows for greater performances. The method is based on a two-dimensional lattice and is characterized by its high degree of parallelism.

Fig. 1

EP 1 696 601 A1

**Description**

**1 Background of the invention**

The purpose of **cryptography** is to achieve **confidentiality** of data regardless of whether the data is transmitted between two recipients or stored on a media.

According to Shannon, cryptography can achieve confidentiality by the combination of two algorithmic operations iterated a given number of **rounds.** The first operation of this **ciphering** method consists in a **confusion** where each symbol of the original data is transformed into another one from the same set of symbols. The second operation consists in a **diffusion** where symbols from different positions in the **plaintext** are either combined to produce a new one or simply exchanged. In this case, diffusion is called a permutation. A round is understood as a pattern of confusion and/or diffusion operations on the symbols. Such a round is then repeated so as to evenly correlate information across all symbols. It is thus commonly accepted that the level of confidentiality increases with the number of rounds. Note that in order to retrieve the original data from the **ciphertext,** both the confusion and diffusion operations must be at least invertible.

The above **ciphering** process is controlled by a parameter which will be called a **key.** In **symmetric cryptography,** the key is known only to people who are authorized to access the information (the sharing of this knowledge of the key is known as the **key distribution problem**). On the other hand, according to the **Kerckhoff principle,** the ciphering process must be considered public. For an ideally designed **encryption** system, the only way to break the confidentiality of a cipher is to try all the possible keys whose number is thus chosen to be large enough to prevent this exhaustive search. Cryptanalysis consists in fmding other **attacks** to break the cipher. In practical situations, if confusion and diffusion are not properly designed, e.g. if they are linear functions, attacks do exist.

In summary, we consider that symmetric cryptography consists of three ingredients: an iterative transformation (confusion + diffusion), a keying mechanism and data. For most of the known cipher systems of practical interest, these ingredients take on the following forms. The iterative transformation is obtained by either the use of a lookup table (often referred to as a **s-box)** and/or an algebraic operation involving symbols from different parts of the data. It is typically non-linear and must be invertible. The keying mechanism most often consists in introducing external information, the **round key,** into the iterative transformation. This external information is usually obtained for each round from a **master key** using a procedure which can possibly be similar to the iterative transformation of the cipher. As for the data, its symbols are usually organized as a string or **block** of fixed size. However in [4] the data is organized in a matrix of fixed size and by matrix it is meant that no reference to the spatial organization of the data is made. Also, in [3] the size of the block is variable.

If the data to encrypt is larger than the block, it is then simply partitioned into several of them which are processed one after the other. The keying mechanism takes this partitioning into account by introducing the so-called **modes of operations.**

In today's information society, the amount of data to encrypt has increased dramatically. Therefore we are faced with a trade-off between security and encryption speed. Indeed, cryptanalysis techniques having greatly improved, high confidentiality, usually obtained by increasing the number of rounds, is difficult to maintain without deteriorating performances. The natural answer to this problem is to devise cipher systems with either less but safer rounds or with faster computed rounds.

**2 Prior art**

For a comprehensive discussion on cryptography and ciphers see [2]. We briefly discuss here the patent record. Note that U.S. patent 4'727'062 contains a good summary of patents on the subject.

The main remark on prior art is that no patent and no existing literature explicitly talks about how the data structure can be used to efficiently design a cryptographic device. In all cases, either the diffusion step is obtained with a specific logical unit, as for patent A below, or the connections between substitution units result in a temporal sequence of transformation, as patent B below. On the contrary, in the present application, diffusion is obtained with a topological or spatial connection between substitution units.

U.S. patent 3'798'359, the content of which is incorporated by reference thereto, titled *Block Cipher Cryptographic System* issued 1974 March 10 to Horst Feistel. This is a confusion-diffusion cipher. The diffusion however is obtained by a specific unit (Claim 1 has:"...linear transformation means connected to non-linear to said non-linear transformation means for rearranging the combination of binary representations in said block of data"). Here *linear transformation means* and *rearranging the combination* stand for the diffusion step of the cipher while *non-linear transformation* corresponds to the substitution step. In contrast, the present application performs the diffusion through the way topological the confusion units are connected to each other.

U.S. patent 4'275'265, the content of which is incorporated by reference thereto, titled *Complete Substitution*

*Permutation Enciphering and Deciphering Circuit* issued 1981 June 23 to George Davida and John Kam. This again is a confusion-diffusion cipher. The diffusion is obtained by the connections of *said complete data translation circuits* which perform the confusion step. Claim 1 has:"...plurality of connections between said binary data inputs, said binary data outputs and said complete data translation circuits...". The device thus comprises layers of confusion units. Each layer corresponds to a round of the ciphering. The connections between layers performs diffusion. These connections, therefore, connect the confusion units between rounds in a temporal sequence. The present application, on the contrary, connects the confusion units in a topological or spatial way for each round. All units of confusion are used at each round and thus the amount of connections do not depend on the number of rounds.

U.S. patent 4'751'733, the content of which is incorporated by reference thereto, titled *Substitution Permutation Enciphering Device* issued 1998 June 14 to Bernard Delayaye et. al. The remark in B also holds here. Claim 6 has:"...permutation means including conductive wiring arranged to ensure homogeneous distribution of all binary elements of an input group over all output groups of said another binary word" where *input group* and *output group* are the input and output between rounds as stated in Claim 1 of the patent.

U.S. patent 5'231'662, the content of which is incorporated by reference thereto, titled *Method and Device for Enciphering Data to be Transferred and for Deciphering the Enciphered Data, and a Computer System Comprising Such a Device* issued 1993 July 27 to Herman van Rumpt and Benny Kwan. The remark in A and B also hold here. Claim 1 has:"...successively and alternately permuting and substituting said each n-bit word a plurality of times...".

U.S. patent 4'157'454, the content of which is incorporated by reference thereto, titled *Method and System for Machine Enciphering and Deciphering* issued 1979 June 5 to Wolfram Becker. The remark in A and B also hold here. Claim 3 has:"...the permutation operation is a symmetrical rotation of the bit positions".

U.S. patent 5'727'062, the content of which is incorporated by reference thereto, titled *Variable Size Block Ciphers* issued 1998 March 10 to Terry Ritter. The remark in B also holds here. Claim 4 has:"...wherein one of said one way diffusion layers uses carry information produced by an earlier one way diffusion way layer". Thus, layers are connected temporally between rounds and not spatially as the present application proposes.

Furthermore the text from this patent explicitly contradicts properties of the present application. At the end of the section concerning substitution-permutation cipher in the prior art, the assignee writes:" If we seek to increase block size in conventional substitution-permutation ciphers, we must find permutations which evenly distribute bits for each size block we support. Unless we also increase the element size, more rounds are required to maintain the overall diffusion demanded in a block cipher. And if we increase the element size, we have to handle substantial increases in the size of all substitution tables. These facts constrain most substitution-permutation ciphers to a fixed design size and number of rounds." The present application teaches that the number of rounds and the amount of data to cipher do not necessarily scale linearly.

### 3 Summary of the invention

This invention refers to a method to encrypt a set of input data into a set of output data, these input data being divided into segments (B1, B2 ... Bn), each segment (B) being applied to a processing site comprising a confusion layer and a diffusion layer, the confusion layer comprising a substitution function for which for an input segment (B) comprised in the set of data [P0... Pn], the output of the function gives an unique output (C), C being comprised in the set of data [P0... Pn], the output of the substitution layer (C) being applied to the diffusion layer, characterized in that, each processing site is connected to at least two processing sites through communication links, these communication links allowing to transfer a data to all processing sites via several processing sites,
the diffusion layer comprises the step of :

- dividing the input of the diffusion layer into several fragments,
- sending at least two fragments through the communication links to the connected processing sites,
- receiving the fragments from the connected processing sites,
- assembling the received fragments and forming the output of the processing site,
- assembling the outputs of the processing sites to form the output data.

This invention relates to a method for the ciphering and deciphering of data. The novelty of the method consists in exploiting the nature of the data structure in order to improve the encryption process.

By data structure we mean that it is possible to spatially arrange the data and to define a neighbourhood for each symbol of data. Traditionally the data is structured in a one dimensional array. However there is no reason not to consider other dimensions or topologies. We therefore propose to use an n-dimensional lattice of processing sites with a specified topology of neighbours to structure the data. Furthermore, the shape and the size of the lattice are arbitrary and can therefore be chosen to accommodate an arbitrary block size.

Considering this new data structure, the confusion layer of an encryption system is applied locally at each lattice processing site. The diffusion layer amounts to propagating information from a processing site to its neighbours through communication links. More precisely, the amount of bits on a given module is equal to the **coordination number** of the module lattice. Note that the module itself may possibly be included several times in the neighbourhood list. This means that there can be number of non-propagating bits. Thus the **granularity** of information for the confusion can typically differ from the granularity of the diffusion.

The crucial advantage of using higher dimension lattices or a better chosen topology is to speed up the mixing of information within the data structure. The typical number of rounds for the mixing is given by the **diameter** of the lattice. However, in the case of non-propagating bits, the lookup table must be well chosen.

The Substitution function can in principle be chosen to be any invertible functions of the number of bits per lattice site. However, the security of the system can be at stake if the function is not appropriate. We propose a new procedure to obtain non-linear invertible s-boxes with an almost uniform distribution of differences. The input of this function is comprised in a set of data P, the output of the function gives an unique output, the same being comprised in the same set of data P. Thus, cryptanalysis and moreover differential cryptanalysis are difficult to perform.

## 4 Objects and advantages

It is an object of this invention to use a generalized data structure to improve security and performances of a cryptographic system.

It is an advantage that the amount of rounds to achieve sufficient security can be determined by the diameter of the lattice. Indeed this invention provides higher diffusion of information within the data to encrypt due to the better connectivity of higher dimension lattices. Faster diffusion is also due to the fact that we propagate bits instead of bigger pieces of information such as bytes.

An another advantage of the use of a regular lattice as a data structure is to offer a scalable device i.e. the size can change independently whereby the encryption method is always identical independently of the size of the data. This leads to an easy software implementation of the method as well as a natural parallel operation of a dedicated hardware. In the latter case, very high performance can be achieved as the confusion and the diffusion operations over the entire lattice can be made to require only one clock cycle each. Note that the algorithmic complexity of the sequential implementation is O(#round $\times$ lattice size $\times$ #blocks). In the fully parallel case, the complexity is O(#round $\times$ #blocks).

Still another advantage of a dedicated hardware implementation is that as the data set to be encrypted increases, the ratio of security level to computational time become more favourable. Indeed, with a suitable topology, the number of rounds, i.e. the diameter, to achieve security grows slower than the data size.

Yet another advantage is that the size and the shape of the lattice can be arbitrary and thus it offers flexibility to choose an adequate block size.

Another advantage is the fact that a reversible table lookup diminishes the hardware implementation complexity.

## Brief description of the drawings

The invention will be better understood thanks to the attached Figures in which:

Figure 1 shows an overview of neighbours cryptographic engine

Figure 2 shows the implementation for the diffusion step

Figure 3 shows the details of a 8 bit substitution box

## 5 Description

To obtain the object of our invention, we need: a n-dimensional lattice L whose sites are labelled by a index $i$ running from 1 to $N$. The quantity $N$ is the size of the lattice. The lattice sites are interconnected according to a chosen lattice topology. Each site has therefore a neighbourhood made up of other sites. There is a direct link between a site and each of its neighbour. The neighbours of each site i are labelled by a link index k, which runs from 1 to $z_i$, where $z_i$ is the coordination number of site $i$ . In addition, each lattice site $i$ contains two internal states $s_i$ and $K_i$, which each are values of $z_i$ bits. The state $s_i$ will contain the cipher data whereas the state $K_i$ will hold the encryption subkeys.

During one phase of operation of the invention, each of the $z_i$ bits stored in site i can flow to a different neighbour: the $k$ th bit is propagated to neighbouring site along link $k$ . While sites are sending their bits to their neighbors, they also receive bits from them. The $z_i$ bits coming from the $z_i$ neighbors of site $i$ are packed together to form the new state $s_i$ . This phase of operation is referred to as **propagation** $P$. In the propagation step, the bit received from a neighbour $k$ is stored in $s_i$ at position $k$ . The relation $k = \Gamma(k)$ can be chosen freely but must be bijective and such that $k = \Gamma(k)$ i.e. $\Gamma^2$

= I. This ensures that the propagation is invertible.

Another important aspect of the invention is that the state $s_i$ of each lattice site can be transformed by applying a function $s'_i = F_i(s_i, K_i)$. This function produces at each site a new set of $z_i$ bits. This is referred to as the substitution operation C. The bits obtained by the new value of the internal state $s'_i$ can then be used for a new diffusion round.

The same procedure is applied simultaneously to the sub-key states $K_i$. However, the new sub-key resulting from the substitution phase is $K'_i = G_i(K_i, s_i)$, where $G_i$ is possibly another function than $F_i$.

The typical way to operate the encryption is to alternate substitution and diffusion phases for $r$ rounds labelled with $t = 1 \dots r$. After the last round, a final substitution is performed. Decryption is then obtained by inverting the whole process. The only constraints is then to have chosen invertible substitution functions $F_i$ and $G_i$ since the propagation $P$ is invertible by construction.

In addition to its size and topology, the lattice is furthermore specified by its shape which is the overall geometry obtained by the assembly of the lattice sites. The bits of the data block to cipher are then used to initialise the states $s_i$ of the lattice sites $i$. Using the flexibility offered by the shape and size of the lattice, it is possible to exactly match the block size with the number of lattice site.

The master key is used to initialise the states $K_i$ as is done for the data. However, if the key is smaller than the number of bits that are necessary to fill the lattice, the master key is repeated until complete **padding.** This is the simplest padding which can be imagined. The security of such a padding scheme is not clear since we have now introduced a repeated pattern of information. It is however easy to imagine more sophisticated scheme such as padding with bits generated from the master key using an good iterative scheme such as the Kirkpatrick-Stoll algorithm. These iterative generators which are often used from creating pseudorandom generators have the advantage of removing any obvious patterns of repeated information coming from the key.

## 6 Typical embodiments

The embodiment of the invention offers several independent choices. The first concerns how an invertible encryption is obtained. The second choice is related to the construction of the substitution functions. Finally, the third one describes several lattice topology used to structure the data to encrypt.

### 6.1 How to inverse the encryption

Provided that the substitution C is invertible, i.e. all the functions $F_i$ and $G_i$ are invertible, a natural way to implement the deciphering process is to apply $r$ times the operation $C^{-1}$ followed by $P^{-1}$, where $P$ is the propagation operation, and to finally apply again $C^{-1}$. This sequence can thus be written as the application of the operator $C(PC)^r$. The deciphering is then written $as(C^{-1}p^{-1})^rC^{-1}$. To implement this invertible procedure requires that $F_i$, $F^{-1}_i$, $G_i$, $G^{-1}_i$ and $P$, $P^{-1}$ are accessible at each site.

However, there exists an alternative solution where ciphering and deciphering are identical. Such a scheme is called a **reversible cipher.** It is preferred because it requires less elements to be implemented. This is made possible by an adequate choice of C and the introduction of an additional operation R to the ciphering and deciphering sequences.

They are now both written as $RC(PC)^r$. By definition, the operation R transforms each lattice state $s_i$ by exchanging the bit at position $k$ with the bit at position $k = \Gamma(k)$.

A property of R is that $PRP = R$ and $R^2 = I$. In order for the ciphering to be reversible, a constraint to be satisfied is that $CRC = R$. It is then possible to show that $RC(PC)^rRC(PC)^r = I$.

### 6.2 Choice of substitution function

A quite flexible way to implement any substitution function is to use a lookup table. For each input state $s$, the output state can then be pre-computed in memory. If the state contains $z$ bits, any substitution function is obtained by storing $2^z$ times $z$-bit values corresponding to the substitution of the $2^z$ possible values of $s$. For $z = 8$ this leads to a small table (256 bytes) which can be implemented in hardware and stored in all the s-boxes of the cipher device. Thus, in one clock cycle, all the substitutions can be done in parallel.

Note that different values of $z$ are obviously possible. For $z = 16$, the lookup table would be 128 Kbytes (128 Kbytes = $2^{16} \times 16$ bits).

Our cipher device may implement a different substitution for the data and for the key. They can be coupled, if desired:

$$s_i' = F_i(s_i, K_i) \text{ and } K_i' = G_i(K_i, s_i)$$

Thus, if both $s_i$ and $K_i$ are 8-bit long, the general implementation of two coupled substitutions function requires two 128 Kbytes lookup tables.

However, a simple choice is to take $F_i(s,K)=F(s)\oplus K$ and $G_i(K,s) = F(K)$ (the operator $\oplus$ is the bitwise XOR operation). Therefore the same lookup table is used at all lattice sites and the round key as well as the data are transformed with the same substitution. Also note that by choosing $G_i$ independent of the state s implies that the key to decipher the data can be computed independently and can therefore be shared between two recipients before the data is encrypted. In the opposite case, the deciphering key is produced after the message is encrypted. This could be unpractical for data transmission although not so for data storage.

There are many possible ways to fill in the lookup tables $F_i$ and $G_i$. For $z$-bit values, there are $2^{z \times 2^z}$ different tables. Obviously, they are not all invertible and adequate. Finding the *reversible* ones is even more difficult.

We propose to select the table using a randomise algorithm. First we build a function $F$ such that $F^2 = I$ (i.e. $F$ is its self inverse). Second, we obtain a reversible substitution $F$ by combining $F$ with the reverse operator $R$:

$$F = \bar{F} R$$

In this way we have

$$FRF = \bar{F} R R \bar{F} R = \bar{F} \bar{F} R = R$$

which is the expected condition to ensure reversibility.

The random algorithm to build F is the following:

1. Set $F(s) = null$ for all $s$. This means the entry s has not yet been calculated.
2. Go over all possible values of $s (s = 0,1,2,...,2^z-1)$. For each such $s$ choose at random $s' \in \{0,2,...,2^z-1\}$. If $F(s') = null$ then set $F(s) = s'$ and $F(s')=s$. Otherwise pick another random $s'$.

This algorithm terminates on average after $O(z \times 2^z)$ steps. The substitution table obtained by this way can be further checked for its robustness against **differential cryptanalysis.** By performing the so-called associated **XOR-distribution,** the substitution giving the most uniform XOR-distribution can be selected.

It is clear at this stage that the substitution table could itself be the encryption key although, here, we highlight the more standard case were the key is a bit string which is combined with the message.

### 6.3 Choice of the topology

The choice of the topology connecting the lattice sites is a crucial aspect of the invention. Here we propose some of the most natural topologies.

For all topologies, one must also define the behaviour of the propagation operation $P$ at the border of the system. The simpler choice is to devise a periodic structure of links. For instance, if the lattice is two-dimensional and rectangular, the upper part of the encryption space is connected with the lower one and, similarly, the left part is linked with the right one.

For a regular Cartesian structures in $d$ dimensions, the sites can be labelled as $(i_1, i_2, ..., i_d)$, where each index $i_l$ varies between 0 and $n_l$-1. With this notation the total size of the data encryption space is $n_1 \times n_2 \times n_3 ... \times n_d$.

Periodicity means that, for all $l$, $i_l + 1$ is mapped onto 0 if $i_l = n_l$ - 1 and that $i_l$ - 1 is mapped onto $n_l$ - 1 if $i_l = 0$.

If periodicity is not implemented (whether in hardware or in software), the sites at the boundary of the lattice have less links than those in the middle. An alternative to periodicity is then to have special substitution functions at the boundaries which produce an output only for the links from which they receive an input. This technique can also be used to design an encryption space which is irregular and, thus, can contain an arbitrary number of bytes.

In what follows, we specify topologies which all have 8 links so as to naturally divide the cipher text in bytes.

The topology of a rectangular two-dimensional lattice with 8 links.

## 6.4 Rectangular two-dimensional lattice with 8 links

This topology, see the above figure in section 6.3, is characterized by sites labelled *(i, j)* for $0 \leq i \leq n$ -1 and $0 \leq j \leq m$ - 1 . Thus the data can have $n \times m$ bytes. The links between lattice sites are the following: site *(i, j)* is connected to sites *(i + 1, j), (i - 1, j), (i, j + 1), (i, j - 1), (i + 1, j + 1), (i + 1, j - 1), (i - 1, j + 1)* and *(i - 1, j - 1)*.

The eight links defined by the above relations are numbered from 1 to 8 and correspond to the direction each of the 8 bits is sent to during the propagation phase.

The diameter of this topology is max($n$ / 2, $m$ / 2) if periodic boundaries are considered.

Thus, a $16 \times 16$ block (i.e. 256 bytes) can be encrypted in 8 rounds. An efficient hardware design can implement each round in two clock cycle (one for substitution and the other for propagation, all in parallel) or even only one cycle (overlapping substitution and propagation with an extra register). With a hardware frequency of 1 GHz, such a device could have a throughput of 16/32 Gbytes/s.

Note that such a topology is particularly easy to implement on a chip and several chips can be connected to encrypt larger data sets, thus offering a fully scalable implementation.

Connecting four chips in a $2 \times 2$ structure would allow a four times larger data set whereas the diameter would only increase by a factor of two. Thus, globally, the throughput would increase by a factor of 2.

## 6.5 Rectangular three-dimensional lattice with 8 links

This topology is characterized by sites labelled *(i, j, k)* for $0 \leq i \leq n$ - 1 and $0 \leq j \leq m$ - 1, $0 \leq k \leq p$ - 1. Thus the data can have $n \times m \times p$ bytes.

The links between lattice sites are the following: site *(i, j, k)* is connected to sites *(i $\pm$ 1, j, k), (i, j $\pm$ 1, k)* and *(i, j, k $\pm$ 1)*. This makes 6 links per site. Two additional links are added onto the site itself. That is, two bits are not moving immediately. It is only through the substitution that, after two steps, all the information at a site is mixed with that of its six natural neighbors.

With periodic boundary conditions, the diameter is max*(n/2,m/2,p/2)*. For $n = m = p$ = 8, one can store 512 Bytes and in 4 round the information is mixed among the entire system. Here, an efficient hardware implementation (fully parallel and 1 GHz) would yield an encryption rate of 64 GBytes/s.

## 6.6 Rectangular four-dimensional lattice

A four-dimensional structure is a topology where each site has naturally 8 neighbors. Site *(i,j,k,l)* is connected

to $(i \pm 1, j, k, l)$, $(i, j \pm 1, k, l)$, $(i, j, k \pm 1, l)$ and $(i, j, k, l \pm 1)$.

Assuming that $0 \leq i \leq n - 1$, $0 \leq j \leq m - 1$, $0 \leq k \leq p - 1$ and $0 \leq l \leq q - 1$, this topology can contain $n \times m \times p \times q$ bytes.

With periodic boundary condition, the diameter is $\max(n/2, m/2, p/2, q/2)$. Thus a $8 \times 8 \times 8 \times 8$ systems contains 4096 Bytes and can mix them entirely in 4 rounds only. With a fully parallel and dedicated hardware implementation (clock rate of 1 GHz), this corresponds to a 512 GBytes/s encryption rate.

### 6.7 Eight-dimensional hypercube lattice

A hypercube lattice of dimension $d$ is a cube with edges of size 2 in a $d$-dimensional space. It thus contains a total of $2^d$ sites.

Sites are labelled with a $d$-digit binary number, each bit corresponding to a different dimension of the cube. One bit per dimension is sufficient because along each dimension there are only two sites. Two sites are connected if their label differs only in one position. For instance, for $d = 8$, 00110010 is neighbour of 00011011, 00110000, 00110110, 00111010, etc. There are obviously $d$ neighbors to each site and the diameter is $d$.

With $d = 8$, there are 256 sites and thus 256 Bytes. Eight rounds will mix them. Thus a encryption rate of 16 GBytes/s can be obtained with parallel dedicated hardware with a clock rate of 1 GHz.

### 6.8 Description of the figures

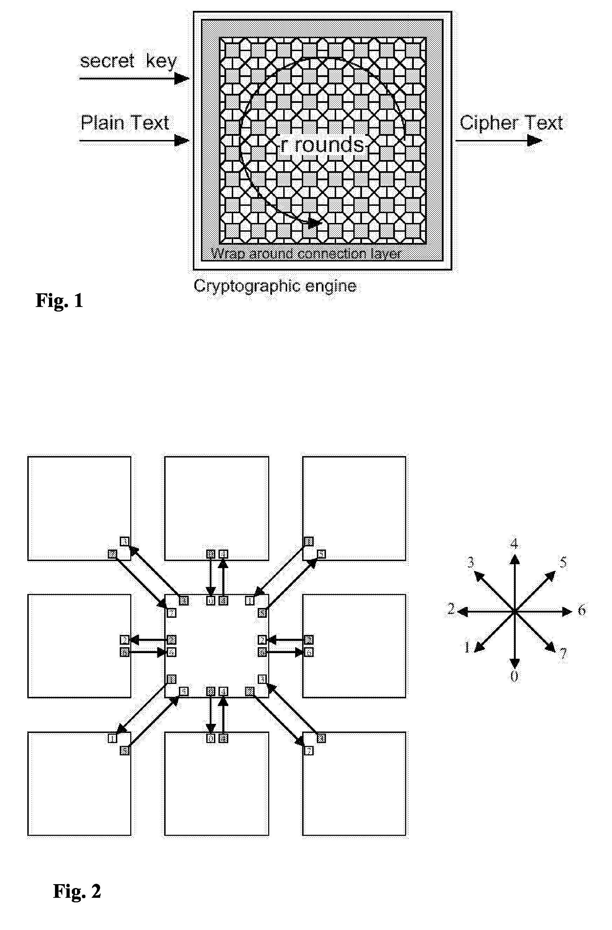

The cryptographic engine illustrated in the figure 1 consists of arranging, in two dimensional block, a set of N processing sites connected to each other. The data to be encrypted is segmented over all the processing sites according to the quantity of information Q which can be contained in each box. The z communication links between each neighboring processing sites is used to communicate the quantity Q of information during the diffusion step. The processing sites at boundaries are usually connected to the corresponding processing sites on the opposite side in a wrap-around fashion. If this is not the case special substitutions must take place at the boundaries. The same procedure is used for the secret key which must first be created equal to the size of the block. Therefore each module must be able to compute both the evolution of the data and the key over r rounds. The ciphertext is obtained by extracting the state of all processing sites and reassembling the message. This mechanism is can be achieved with several topologies and different values of Q. Preferred topologies involves having a equal number of neighbors for each module. Preferred value for Q is z bits. For example Q is eight bits and the corresponding topology consists of nearest and second-nearest neighbors. Another example is Q equals four bits and the topology consists of nearest neighbors. Another preferred value for Q is a z bytes and the topologies are identical to the bit case.

In figure 2, we illustrate how one 8-bit processing site is connected to its neighbors within a 8 neighbors topology of N processing sites. The communication links are labelled from 0 to 7 for each bit in the processing site as shown on the right side of the figure. The in-going and out-going communication links are labelled according to the direction of information transport. The bi-directional by symmetry communication links allows for a identical implementation of the decryption phase. The out-going bits are stored in parts of registers inside the processing site which are here shaded in grey and the in-going bits are stored parts of registers shaded in white. The same procedure is used for the key.

The exchange of information according to the above mechanism is the diffusion step.

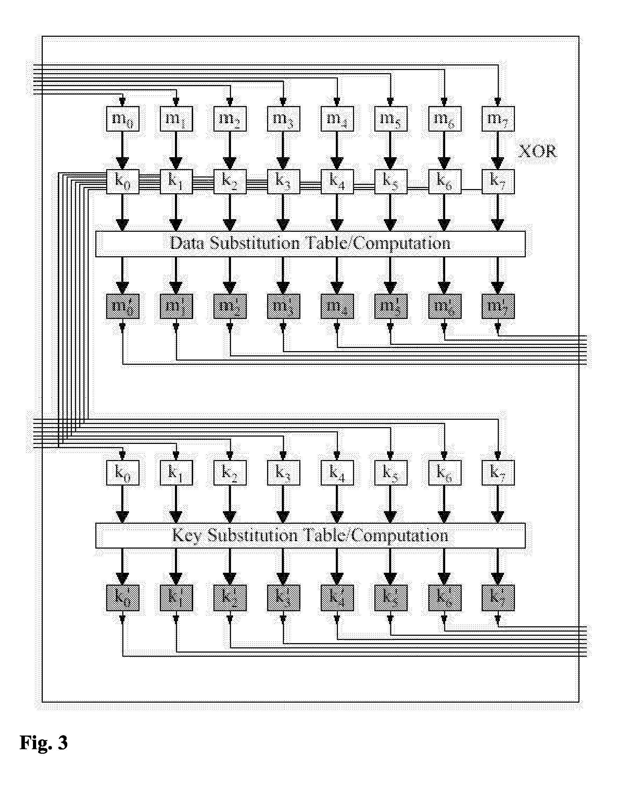

The figure 3 illustrates the substitutions occuring inside the a processing site. First, bits from neighboring processing sites are XORed with the key bits also from neighboring boxes. The 8 bits are then used to lookup or compute the new values of the message which will be outgoing to neighboring boxes during the diffusion step. Second, the bits of the key undergo an identical processing with or without the same table or computation. The resulting bits will also be communicated to the neighboring boxes during the diffusion step.

The registers $M_0$ to $M_7$ are the 8 input registers. These inputs can be either part of the initial message to be processed or result of previously processing sites. These input registers $M_0$ to $M_7$ are mixed (or XORed) with a key data $K_0$ to $K_7$. The result of this operation is then applied to the substitution function, generally based on a table of constants. The output of the substitution function, called $M_0'$ to $M_7'$ is then communicated through the communication links to other processing sites.

The second part of the figure 3 shows the same processing for the key. In a parallel matter, the initial key is applied to the same processing sites, without the key mixing step. The processing sites of the key processing form an identical lattice as the one which process the message data.

### 6.9 Hardware implementation

For several reasons, our invention is particularly well suited for hardware implementation. First the scheme is local, the fabrication of a dedicated chip is thus straightforward since it consists in the replication of the same simple logical unit. Second, the scheme is parallel and thus the chip would be able to fully implement this parallelism and take full advantages of this features to obtain high performances. The preferred embodiment for a hardware implementation of this invention is the two dimensional array in section 6.4 since Silicium chips are themselves two dimensional and the interconnection between the logical units of the invention is natural. Another possible hardware implementation makes use of FPGA which combine the advantages of a dedicated chip and that of programmable environment through the VHDL language which is a common way of programming electrical circuits.

### 6.10 Software implementation

Software implementation of the invention is easy and straightforward. The natural parallelism of the invention may benefit from the use of multiprocessor machines. Also, parallel features of some modem processors such as Intel can be use to fully take advantage of the invention. The scalable nature of the invention assures that a simple software implementation can handle arbitrary sized amount of data.

### 7 Glossary

#### attacks

Action consisting in trying to access confidential data without the knowledge of the key. Brute force attacks consists in trying all the keys. Cryptanalysis consists in using pairs of ciphertexts and keys to reveal information on the key. This is possible if deficiencies in the cipher are known.

#### block

The size of the data a cipher can process. For longer message to cipher, it is therefore necessary to divide the data in several blocks.

#### ciphering

The process of obtaining confidential data from clear data and a key.

#### ciphertext

The encrypted data.

#### confidentiality

The ability to keep information secret to non-authorized persons.

#### confusion

In a confusion-diffusion cipher, the operation consisting in substituting a symbol of data with another symbol.

#### coordination number

[0085]    In a lattice topology, the number of neighbors of a lattice site.

#### cryptography

The science of transforming data such as to hide all information contained in it. The access to information is only possible to key holders. The key allows to reverse the encryption of the data.

#### diameter

In a lattice topology, the smallest distance, i.e. the number of sites, between the two most distant sites.

#### differential cryptanalysis

A specific attack making use of the study of difference in pairs of plaintext-ciphertext to unfold the key.

**diffusion**

In a confusion-diffusion cipher, the operation of spreading the information across the data after each **round.**

**encryption**

The process of obtaining confidential data from clear data and a **key.** Synonym of **ciphering.**

**granularity**

In a lattice topology, the unit size of information considered for a given transformation.

**Kerckhoff principle**

The principle by which it is safer to consider that the cipher mechanism is known or will eventually be known to everyone. The only secret information needed to access confidential data is the key.

**key**

The secret parameter used in the ciphering to hide data. The knowledge of the key is only known to recipients authorized to access the confidential data.

**key distribution problem**

The fact that some secret information controls the ciphering and must therefore be distributed in a secure way before communication of confidential data is possible.

**master key**

The key which is shared between two recipient of confidential data.

**modes of operations**

In block ciphers, the way by which the ciphering of each block is correlated to the previous block in order not to diminishes the security of the cipher.

**padding**

When filling a fixed sized space with a smaller sized object, the remaining space is then padded with extra objects. In the case of a data space bigger that the key size available, the padding is, for example, the key itself repeated as much as necessary.

**plaintext**

The data to be encrypted.

**propagation**

In a lattice, the operation consisting in moving information from a site to its neighbors.

**reversible cipher**

In order to cipher and decipher, the transformation operation of the cipher used must be invertible. A reversible cipher is a invertible cipher where the ciphering and decipher are identical.

**round key**

In an iterative cipher, the key which is used to cipher the data at each round. The round key is obtained from the master key with usually the same transformation as for the ciphering of data. Iterative cipher require the introduction of secret information at each round to obtain global confidentiality of the data.

**rounds**

In an iterative cipher, the number of successive applications of the transformation used to achieve the ciphering.

**s-box**

An acronym for a substitution box. In a confusion-diffusion cipher, this is the logical element which performs the substitution of symbols in the clear data.

**security**

For a cipher, the ability not to reveal information. The security of iterative cipher is considered to increase with the number of rounds.

**substitution**

In a confusion-diffusion cipher, the operation consisting in substituting a symbol of data with another symbol. Synonym of confusion.

**symmetric cryptography**

In order to communicate confidential data, both recipient must have knowledge of the key. The fact the ciphering key and the deciphering key are identical means that both recipient have a symmetric role.

**XOR-distribution**

A table giving for each possible difference between two bytes the resulting difference after a round of encryption.

**Bibliography:**

1 Claude E. Shannon. *A mathematical theory of communication. 1948*
2 Bruce Schneier. *Applied Cryptography.* John Wiley & Sons, 1996
3 Terry Ritter. U.s. patent 5'727'062, 1995, the content of which is incorporated by reference thereto.
4 J.Daemen and V.Rijmen. Rijndael, the advanced encryption standard. *Dr.Dobb's Journal,* 26(3):137:139, March 2001

**Claims**

1. Method to encrypt a set of input data into a set of output data, these input data being divided into segments (B1, B2 ... Bn), each segment (B) being applied to a processing site comprising a confusion layer and a diffusion layer, the confusion layer comprising a substitution function for which for an input segment (B) comprised in the set of data [P0... Pn], the output of the function gives an unique output (C), C being comprised in the set of data [P0... Pn], the output of the substitution layer (C) being applied to the diffusion layer, **characterized in that**, each processing site is connected to at least two processing sites through communication links, these communication links allowing to transfer a data to all processing sites via several processing sites,
the diffusion layer comprises the step of :

   - dividing the input of the diffusion layer into several fragments,
   - sending at least two fragments through the communication links to the connected processing sites,
   - receiving the fragments from the connected processing sites,
   - assembling the received fragments and forming the output data of a processing site.

**2.** Method of claim 1, **characterized in that** all fragments are exchanged through the communication links.

**3.** Method of claim 1, **characterized in that** at least one fragment is kept in the diffusion layer, the remaining fragments being exchanged via the communication links.

**4.** Method of claim 1 to 3, **characterized in that** communication link are bi-directional so that the fragments are exchanged between two processing sites.

**5.** Method of claims 1 to 4, **characterized in that** the property of the substitution function is called invertible since for a given input segment B, the function outputs the result C and for a given input segment C, the function outputs the result B.

**6.** Method of claims 1 to 5, **characterized in that** the property of the substitution function is called reversible so that, for a given input segment B and output segment C, a transformation R can be applied on C so that the output of the substitution on RC is RB.

**7.** Method of claims 1 to 6, **characterized in that** the input of the processing site is previously mixed with a key data prior to be applied to the substitution layer.

**8.** Method of claim 7, in which the key data is generated according to the method of claims 1 to 4, an initial key being divided into segments, each segment being applied to a processing site in which the output data is used as key data.

**9.** Method of claims 1 to 8, **characterized in that** the output data is connected to the input data within the processing site for an additional round of encryption while changing the key data.

**10.** Method of claims 5 to 6, **characterized in that** the output data is further mixed with the key prior to be outputted from the processing site.

**Fig. 1**

**Fig. 2**

**Fig. 3**

**European Patent Office**

**EUROPEAN SEARCH REPORT**

Application Number

EP 05 10 1526

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| T | CHOPARD B; MARCONI S: "Discrete Physics: a new way to look at cryptography"[Online] 28 April 2005 (2005-04-28), pages 1-28, XP002351782 Retrieved from the Internet: URL:http://arxiv.org/abs/nlin.CG/0504059> [retrieved on 2005-10-28] * the whole document * | 1-10 | H04L9/06 |
| X | CROUNSE K R ET AL: "Pseudo-random sequence generation using the CNN universal machine with applications to cryptography" CELLULAR NEURAL NETWORKS AND THEIR APPLICATIONS, 1996. CNNA-96. PROCEEDINGS., 1996 FOURTH IEEE INTERNATIONAL WORKSHOP ON SEVILLE, SPAIN 24-26 JUNE 1996, NEW YORK, NY, USA,IEEE, US, 24 June 1996 (1996-06-24), pages 433-438, XP010210287 ISBN: 0-7803-3261-X * page 433 - page 434 * * page 437, paragraph 3.2 * | 1-10 | |
| A | LAFE O: "DATA COMPRESSION AND ENCRYPTION USING CELLULAR AUTOMATA TRANSFORMS" ENGINEERING APPLICATIONS OF ARTIFICIAL INTELLIGENCE, PINERIDGE PRESS, SWANSEA, GB, vol. 10, no. 6, December 1997 (1997-12), pages 581-591, XP000981278 ISSN: 0952-1976 * page 581, left-hand column - page 583, left-hand column * * page 588 - page 589 * | 1-10 | **TECHNICAL FIELDS SEARCHED (Int.Cl.7)** H04L |

-/--

The present search report has been drawn up for all claims

| Place of search | Date of completion of the search | Examiner |
|---|---|---|
| Berlin | 28 October 2005 | Carnerero Álvaro, F |

**EP 1 696 601 A1**

**European Patent Office**

# EUROPEAN SEARCH REPORT

Application Number

EP 05 10 1526

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | FRANTI E ET AL: "CRIPTOCEL: design of cellular automata based cipher schemes" COMMUNICATIONS, CIRCUITS AND SYSTEMS, 2004. ICCCAS 2004. 2004 INTERNATIONAL CONFERENCE ON CHENGDU, CHINA 27-29 JUNE 2004, PISCATAWAY, NJ, USA,IEEE, US, 27 June 2004 (2004-06-27), pages 1103-1107Vol2, XP010732094 ISBN: 0-7803-8647-7 * page 1104 - page 1107 * ----- | 1-10 | |
| A | YE W ET AL: "Experimental realization of a highly secure chaos communication under strong channel noise" PHYSICS LETTERS A, NORTH-HOLLAND PUBLISHING CO., AMSTERDAM, NL, vol. 330, no. 1-2, 13 September 2004 (2004-09-13), pages 75-84, XP004547960 ISSN: 0375-9601 * page 77; figure 1 * ----- | 1-10 | TECHNICAL FIELDS SEARCHED (Int.Cl.7) |

The present search report has been drawn up for all claims

| Place of search | Date of completion of the search | Examiner |
|---|---|---|
| Berlin | 28 October 2005 | Carnerero Álvaro, F |

EPO FORM 1503 03.82 (P04C01)